# EUROPEAN PATENT APPLICATION

(11) **EP 1 548 921 A1**
(43) Date of publication of application: **29.06.2005**
(21) Application number: 03293296.4
(22) Date of filing: 23.12.2003
(51) Int. Cl.: H02M 3/155, H02M 1/00, H02H 7/10

(54) **Dc-to-dc converter for a car electrical system**

(71) Applicant: ALCATEL, 75008 Paris (FR)
(72) Inventor: Rascon Martinez, Miguel, 28042 Madrid (ES); Diaz Guerra Mora, Valentin, 28037 Madrid (ES)
(74) Representative: Thévenet, Jean-Bruno

(57) **Abstract**

DC-to-DC switching power converter (11) coupled between a higher-voltage bus (13) and lower-voltage bus (18) that can be operated as an up or/and down converter comprises a first switching element (14), a second switching element (15), a sensing means (17) connected in series between an end of an inductor (16) and an end of a capacitor (17-2), a third element (14-1) connected in series between the first element (14) and the higher-voltage bus (13), a fourth element (17-1) connected in series between the sensing means (17) and the lower-voltage bus (18) such that both the third and fourth (14-1,17-1) switches are controlled, open or closed, as a function of a comparison between a predetermined current threshold value and a current level signal provided from the sensing means (17) when the DC/DC switching power converter (11) operates under anomalous condition.

## Description

### OBJECT OF THE INVENTION

The present invention relates to a current sensing device for a bi-directional power converter in a motor vehicle, and more particularly to DC-to-DC switching power supply that regulates the current flow provided to the car electrical systems, DC-to-DC this switching power supply including electrical protections and sensors for current measurement.

### STATE OF THE ART

In view of ever increasing number of electronic devices that modem motor vehicles require, a dual architecture 42/12V car system has been proposed. It is well known in the art that the dual architecture 42/12V may have a DC/DC uni- or bi-directional switching power supply coupled to convert electrical energy from a first bus to a second bus or vice versa. Note that, for example, the first bus is of lower voltage than the second bus.

Typically, the conversion process is performed by means of a variable buck or/and boost converter which can be operated to receive electrical energy from the first bus and convert it to the corresponding voltage of the second bus or vice versa.

Due to internal or external conditions, a malfunction may occur that can damage the converter or parts of the car electrical system. For the power converter, these conditions require that it be protected. Usually, these conditions are referred to as input overvoltage, input short-circuit, output overvoltage, output short-circuit, reverse voltage polarity or short-circuit between both buses. These conditions are not described but are well known to those skilled in the field.

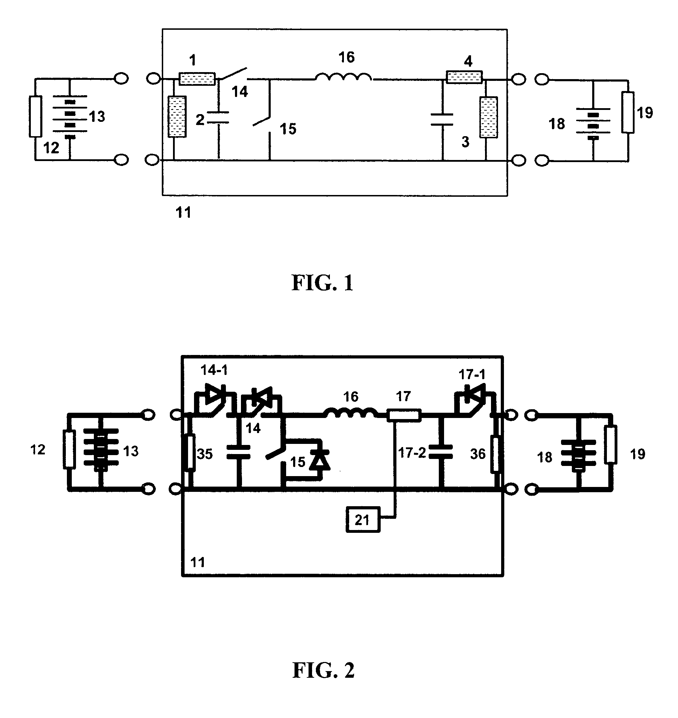

Referring to figure 1, under certain operational conditions such as a short-circuit at any bus for example, an excessive current (in value and flow sense) is produced that can endanger the DC/C power converter itself or the car electrical systems. Then, this high current surpasses the technical ratings of the switches 14, 15, or inductor 16. To avoid these dangers the DC/DC converter has several protecting means 2, 3 for detecting dangerous voltages at input or output and current sensing means 1, 4 that are placed at both ends of the DC/DC power converter, near each bus. Although workable, this is a cost and packaging-inefficient use of the additional hardware represented by means used for detecting the abnormal operation condition described above because of the electrical circuitry required.

In addition, the use of current sensing elements means losses, being especially critical with the high currents circulating in these DC/DC power converters, increasing complexity and associated costs due to the need for a greater heat-sink for dissipation of the energy losses.

In addition to these elements for protection, sometimes is required that the converter monitors and reports the current circulating at input or output, so that extra elements need to be added.

There is a need in the automobile supplier for a DC to DC switching power system comprising reduced additional hardware means to detect such abnormal operation condition of the dual architecture 42/12V and allowing easy and reliable operation of the electrical loads of the motor vehicle.

Consequently, there is also a need for a DC/DC power converter design which will overcome protection difficulties and current monitoring with the DC/DC power converter and which will do so in a cost-effective and packaging-efficient manner that will provide advantages over alternative designs.

### CHARACTERISATION OF THE INVENTION

The present invention seeks to overcome or reduce one or more of the above problems by means of a DC-to-DC switching power converter coupled between a higher-voltage bus and lower-voltage bus that can be operated as an up or/and down converter comprises a first switching element, a second switching element, a sensing means connected in series between an end of an inductor and an end of a capacitor, a third element connected in series between the first element and the higher-voltage bus, a fourth element connected in series between other the end of the sensing means and the lower-voltage bus such that both the third and fourth switches are controlled, open or closed, as a function of a predetermined current level signal provided from a logic control circuit when the DC/DC switching power converter operates under anomalous condition.

One object of the present invention is the simplification of the electrical circuitry for controlling the protections and output/input currents monitoring, due to the combination of several elements.

Another object is to achieve a reduced cost because fewer elements are used, together to a reduced size.

Consequently, a further object of the present invention is the elimination of at least a sensing resistance in series for reducing energy losses in order to optimise conversion efficiency. Furthermore, a reduction in the size of the required heat-sink is achieved.

An additional object of the present invention is the simplification of the electrical circuitry for controlling the protecting means, due to the combination of several elements. This simplified circuitry means a reduced cost because fewer elements are used, but also a reduced size.

### BRIEF EXPLANATION OF THE FIGURES

A more detailed explanation of the invention is given in the following description based on the attached figures in which:
- Figure 1 is a schematic diagram of a switching power converter according to the prior art, and
- Figure 2 is a schematic diagram of a switching power converter used in a car electrical system according to the invention.

### DESCRIPTION OF THE INVENTION

Figure 2 illustrates a DC-to-DC switching power converter 11 that is coupled between a higher-voltage bus 13 and lower-voltage bus 18. Further on the higher-voltage bus is a first battery 13 for energy storage at the higher voltage, preferably having a nominal voltage of 42V; and on the lower-voltage bus there is a second battery 18 for energy storage at the lower voltage, preferably having a nominal voltage of 14V. Each energy distribution bus can be connected to a plurality of electric loads 12, 19, respectively.

The DC-to-DC converter 11 includes a first element 14 for switching control in the event of operating in down conversion mode and a second element 15 for freewheeling switch, such that it is possible to control the switching of each switched transistor by means of a switching signal generated by a pulse width modulator PWM, not shown. Note that the DC/DC converter 11 may be a variable boost or/and buck converter without electric insulation, but in this description a "step-down" (i.e. buck) mode is considered, only for explanation.

The DC/DC converter 11 also includes a third element 14-1 which is connected in series between the first element 14 and an end of the electrical loads 12, a sensing means 17 is connected in series between an end of an inductor 16 and an end of a capacitor 17-2, and a fourth element 17-1 is connected in series between the other end of the sensing means 17 and an end of the electric loads 19. These are the traditional electrical loads on a motor vehicle. For example, each switching element 14, 15, 14-1 and 17-1 can be a field effect transistor MOSFET, including the representation of the parasitic diodes which are known for the skilled person.

In normal operation, for example, when the first battery 13 is not providing sufficient power to the higher-voltage bus, DC/DC converter 11 is operated as an up-converter to provide high-voltage energy for operating electrical loads 12. Once the higher-voltage bus has sufficiently powered operating, this up-conversion is no longer performed, and the first load 12 can be powered from the output provided by the first battery 13 to high-voltage bus.

Conversely, the DC/DC converter 11 is operated as a down-converter, converting the high voltage from higher-voltage bus 13 to the relatively lower voltage of the second battery 18. Power is thus provided to charge the second battery 13 and provide energy for the traditional loads 19.

During operation of the DC/DC converter 11 under normal conditions, both switches 14-1, 17-1 are held closed, i.e. both switches 14-1, 17-1 will remain switched-ON (i.e. conducting).

However, when the conditions of operation of the energy conversion system diverge from normal operation as explained above (output short-circuit, for example), the current flow through the inductor 16 is then increased, i.e. current flow from higher-voltage bus towards lower-voltage bus, the sensing resistor 17 providing a current sensing signal that reflects this event to a logic control circuit 21. The latter circuit 21 receives a fast and clean indication of the output current through the inductor 16 which is used to open both the third and fourth switches 14-1, 17-1, respectively. That is, the power switches are OFF (i.e. non-conducting).

Depending on the specific failure condition, it is also possible to open a single switch, 14-1 or 17-1. If the current flow under abnormal condition is not stopped, it can damage the DC/DC converter 11 and the car energy system. Then, the third and fourth switches 14-1, 17-1 are added to prevent such damage.

It should be observed that the current level signal provided from the sensing resistor 17 must be higher than a predetermined threshold value, and positive or negative depending on the flow of the current (forward or reverse).

When the sensing resistor 17, providing a current sensing signal that detects the current through the inductor 16, is reversed, current flow, from the lower-voltage bus 18 towards the higher-voltage bus 13 (for example, a short-circuit at higher-voltage bus). The current sensing signal is used by the logic circuit 21 to open third switches 14-1. Then the third switch 14-1 provides important reverse-protection for the DC/DC converter 11 and the car electrical system.

Consequently, to detect these anomalous situations that could damage the DC/DC converter 11 and the electrical system of the motor vehicle as a whole, the DC/DC converter 11 includes a first 35 voltage means for measuring the input voltage, a second 36 voltage means for also measuring the output voltage, and the sensing resistor 17. The combination of these measuring means provides the corresponding control signals to the logic control circuit 21 for operating the third and fourth switches 14-1, 17-1, respectively.

Furthermore, the conduction duty cycle of the first switch 14 is continuously monitoring by the logic circuit 21. Using an adequate control algorithm, the logic circuit 21 provides a highly accurate measurement of the current flow from the higher-voltage bus 13, using the basic expression I _{HV-bus}= I_{LV-bus} * D, being I_{LV} calculated based on the information of sensing element 17 when the power converter is operating in "step-down". Therefore, this logic circuit 21 is able to provide an accurate measurement of both currents (I_{HV-bus} and I_{LV-bus}) using a single current sensing element, thus simplying circuitry, size and losses.

In opposition, when the converter is operating in step-up or "boost" mode, the same principle can be used, the equation in this case being I _{HV-bus}= I_{LV-bus} * (1-D), being in this case "1-D" the duty cycle of first switch 14, and standing "HV" higher-voltage bus and "LV" lower-voltage bus.

Then, the conduction duty cycle of the first switch 14 provides a fast and clean indication of the input current, that is, current provided from the higher-voltage bus 13.

It should be appreciated that this DC to DC converter 11 does not require other sensing means since the current through the sensing resistor 17 is continuous. In addition, the current sensor signal from 17 is used to manage the activation or deactivation of the protection devices 14-1 and 17-1.

## Claims

1. **DC-to-DC converter** suitable for a car electrical system coupled between a higher-voltage bus (13) and lower-voltage bus (18) can be operated as a up or/and down switched power converter (11) comprising a first switching element (14), a second switching element (15); a sensing means (17) connected in series between an end of an inductor (16) and an end of a capacitor (17-2); **characterized in that** the switched power converter (11) further includes a third element (14-1) connected in series between the first element (14) and the higher-voltage bus (13), a fourth element (17-1) connected in series between the other end of the sensing means (17) and the lower-voltage bus (18) such that both switches (14-1, 17-1) are turned OFF as a function of a predetermined current level signal and flow sign provided from the sensing means (17), and a predetermined level voltages provided by means of a first (35) and second (36) voltage means when the DC-to-DC switching power converter (11) operates under anomalous conditions.

2. **DC-to-DC converter** according to claim 1; receiving a logic control circuit (21) the signals provided from the sensing means (17) and the first and second voltage means (35, 36).

3. **DC-to-DC converter** according to claim 2; being the logic control circuit (21) coupled to the sensing means (17) for driving the third and fourth switches (14-1, 17-1) in response to a current sensing signal provided from the sensing means (17).

4. **DC-to-DC converter** according to claim 4; each switching element (14, 14-1, 15, 17-1) being a field effect transistor MOSFET, respectively.

5. **DC-to-DC converter** according to any preceding claim 1 to 4; operating DC-to-DC switched power converter (11) in step-up mode.

6. **DC-to-DC converter** according to claim 4; being the current sensor element (17) connected in series between the first element (14) and the third element (14-1).

7. **DC-to-DC converter** according to claim 4; being the current sensor element (17) connected between the first element (14) and the second switching element (15).

8. **DC-to-DC converter** according to claim 4; being the current sense (17) connected in series between the second switching element (15) and a capacitor (17-2).

9. **DC-to-DC converter** according to claim 3; being the conduction duty cycle of the first switch (14) continuously monitoring by the logic circuit (21).

10. **DC-to-DC converter** according to claims 5 and 9; providing the logic circuit (21) an measurement of the current flow from the higher-voltage bus (13) using the expression I _{HV-bus} I_{LV-bus} * D, being I_{LV} calculated based on the information of sensing element (17), D conduction duty cycle of the first switch (14).

11. **DC-to-DC converter** according to any preceding claims 1 to 8; the switched power converter (11) can be operated in a bi-directional mode transferring energy from higher-voltage bus (13) to lower-voltage bus (18) and vice versa.

12. **Car electrical system** suitable for controlling the energy flowing between a higher-voltage bus (13) and lower-voltage bus (19) connected by means of a DC-to-DC switched power converter (11) according to claims 1 to 10.
